# EUROPEAN PATENT APPLICATION

(11) **EP 3 889 246 A1**
(43) Date of publication of application: **06.10.2021**
(21) Application number: 21164661.7
(22) Date of filing: 24.03.2021
(51) Int. Cl.: C12G 3/07, B27K 3/32, B27L 11/02, B65D 8/00, C12H 1/22, A23L 2/56, A23L 27/27, A47J 37/07, C10L 5/08, C10L 5/36, C10L 5/44, C12F 3/06, B27N 3/08

(54) **METHOD OF OBTAINING A BLOCK OF WOOD SHAVINGS AND BLOCK OF WOOD SHAVINGS OBTAINABLE BY MEANS OF SAID METHOD**

(30) Priority: 03.04.2020 ES 202030276
(71) Applicant: King Cook in Wood S.L., 26190 Nalda (La Rioja) (ES)
(72) Inventor: PETREI, Liviu Marian, 26190 Nalda (La Rioja) (ES); MURESAN, Marinela, 26190 Nalda (La Rioja) (ES)
(74) Representative: Maslanka Kubik, Dorota Irena

(57) **Abstract**

The present invention describes a method of obtaining a block of wood shavings of the type that come from barrels used for fermenting alcoholic beverages, as well as a block of wood shavings obtainable by means of said method. The method comprises the steps of washing the wood shavings by immersing them in an alkaline aqueous solution; extracting the wood shavings and draining them; washing the wood shavings by immersing them in an acidic aqueous solution; extracting the wood shavings and draining them; rinsing the wood shavings with water; drying the wood shavings; and binding together a plurality of wood shavings by compression, without the additional input of water or other additives or binders, such that they form a single body.

## Description

### TECHNICAL FIELD

The present invention generally relates to the field of food preparation, and more specifically to obtaining a block of wood shavings from barrels for fermenting alcoholic beverages, intended for use in food preparation.

### BACKGROUND OF THE INVENTION

The technique of smoking, which consists of exposing foods to smoke coming from the combustion of certain woods, either in the form of pieces, shavings, sawdust, etc., is known in the field of food preparation for modifying the aroma and flavor of said foods depending on the type of wood.

For example, there are wood shavings (also referred to as chips) obtained from barrels for fermenting alcoholic beverages, such as wine, whiskey, etc. The wood of these barrels, and accordingly the shavings obtained, acquire the aroma of the beverage that has been prepared in them. When the shavings are burned, they transmit the aroma to the foods exposed to smoke from combustion, for example, in a grill, oven, etc.

Patent document ES2444017A1 belonging to the same inventors as the present document describes a method of obtaining wood shavings from barrels used for fermenting alcoholic beverages. After separating the staves from the barrel and chipping them, the obtained shavings are subjected to particular treatments, as a result of which their pores are sealed. Therefore, the shavings conserve their natural aroma coming from the beverage that was fermented in the barrel for a period of time substantially greater than that of the prior art.

However, the wood shavings of the prior art are rapidly consumed when they burn.

The manufacture of wood products having a higher density for use as biofuels, for example pellets and briquettes, which allow a slower combustion, is known in the art. These products are obtained by the high-pressure mechanical compaction of wood fragments such as sawdust, shavings, etc. Before compaction, the wood is cut and/or ground, and the wood fragments are mixed with water to impart suitable moisture to them. Due to the high pressure and heat generated in the compression process, the lignins and resins contained in the wood are converted, upon interaction with the moisture of the wood, into a natural adhesive which ensures the shape and stability of the product.

In the case of manufacturing pellets (small compacted cylinders measuring 6 to 10 millimeters in diameter), pressing takes place by pushing a mass of particles through small pressing orifices arranged in a die. Pelletizing machines usually manufacture soft wood pellets, for example from pine or fir. If the attempt is made to manufacture pellets from harder woods (that are harder to cut, grind, and compact), such as oak for example, the machine heats up, and there is a risk of it breaking down because the pressing die can become blocked because the wood does not suitably go through the orifices of the die.

Something similar happens in the case of manufacturing briquettes (a compacted product that is larger in size than pellets). In this case, pressing takes place by reducing the volume of a mass of wood fragments in a closed pressing chamber, for example by means of pushing using a piston. If the attempt is made to manufacture briquettes from hard woods, such as oak for example, higher pressures are needed in the pressing chamber, higher friction in the transit of the wood occurs, and the machine heats up, with the subsequent risk of blockage.

To enable the machine to correctly operate in these cases, in addition to a good cooling, it is necessary to reduce the hardness of the raw material by mixing hard wood with softer wood, thereby making it easier to be handled.

### SUMMARY OF THE INVENTION

The inventors have observed that 360 g of moistened shavings obtained according to patent document ES2444017A1 and arranged in contact with charcoal at 400 - 600°C in a conventional grill take about 5 minutes to completely burn. Therefore, in order to proceed with smoking operations for longer durations, for example 2 to 3 hours, the shavings must be regularly replaced every so often, which is uncomfortable and tedious. There are cases where it is necessary to open the cooking or smoking device (grill, oven, smoker, etc.) to introduce the shavings, which results in a loss in efficiency due to undesired losses of smoke and heat every time the shavings are replaced.

Under other circumstances, the shavings may even last for much less time, such as for example by being in direct contact with charcoal burning at 1000°C in a professional oven, in which case the shavings burn completely in about 30 seconds, making the use thereof unfeasible under these conditions.

Based on the foregoing, the inventors have observed the need to obtain a product from wood shavings coming from barrels for fermenting alcoholic beverages which overcomes the drawbacks of the prior art. Namely, it would be desirable to have a method which provides a product that is consumed more slowly when burned so as to allow longer smoking processes. It would also be desirable for said method not to significantly affect the smoking characteristics previously acquired by the shavings, namely the intensity of the smoked aroma and flavor which are provided to the foods, and the conservation time of the aroma in the shavings until the time they are used.

The wood most widely used in barrels for fermenting alcoholic beverages is oak. Oak is a hard wood, and depending on the alcoholic beverage that was accommodated in the barrel, the wood may become even harder, which complicates or even prevents the process of manufacturing pellets or briquettes, as explained above.

For the machinery of the state of the art to not become blocked during the manufacture of pellets or briquettes, hard wood must be mixed with softer wood. However, the product obtained from mixing woods acquires different properties from unmixed wood, which detracts from the original smoked aroma and flavor that is transmitted to foods during smoking.

Additionally, the parameters of the machinery (cutting speed, grinding pressure, compacting pressures, etc.) must be configured in a particular manner and some parts of the machinery (blades, grinder, pressing chamber) even have to be changed to manufacture products of these types of hard woods, which leads to an increase in production times and, accordingly, in costs.

Moreover, the inventors have realized that at high compression pressures, the final product loses certain smoking capabilities. Namely, the smoked aroma and flavor transmitted to foods is less intense.

Common knowledge leads to the idea that if lower compression pressures are chosen, there is a risk that the end product is not suitably shaped because it is not sufficiently compacted and readily falls apart, and that in these cases it would be necessary to use an additional additive or binder by way of an adhesive. However, the use of additional additives or binders is undesirable, because in addition to increasing production costs, it would detract from the smoking characteristics previously acquired by the shavings. Furthermore, it would have to be ensured that the use of the additives and binders did not involve operative issues in cooking devices, or health or environmental risks.

According to the foregoing, to solve the mentioned drawbacks of the prior art, according to a first aspect, the present invention discloses a method of obtaining a block of wood shavings of the type that come from barrels used for fermenting alcoholic beverages, comprising the steps of:
a) washing the wood shavings by immersing them in an alkaline aqueous solution;
b) extracting the wood shavings and draining them;
c) washing the wood shavings by immersing them in an acidic aqueous solution;
d) extracting the wood shavings and draining them;
e) rinsing the wood shavings with water
f) drying the wood shavings;
g) binding together a plurality of wood shavings by compression, without the additional input of water or other additives or binders, such that they form a single body.

As a result of the method of the present invention, a compact product is obtained from wood shavings coming from barrels for fermenting alcoholic beverages, which is consumed more slowly when burned, thereby allowing longer smoking processes.

Surprisingly, the characteristics of the shavings obtained by means of the method disclosed in document ES2444017A1 allow said shavings to be bound in a single block by means of lower pressures than in the case of the shavings of the state of the art, without the need for the additional input of water or other additives or binders, and without the need for mixing the original shavings with softer wood shavings. All this allows the compression binding step (step g) to not significantly affect the smoking characteristics previously acquired by the shavings.

Accordingly, due to the good qualities of the shavings obtained by means of the method disclosed in patent document ES2444017A1, the compression can be performed by means of conventional compacting equipment, which is neither sophisticated nor does it offer any significant features in terms of power, which allows saving in product manufacturing costs, investment costs, installation costs, maintenance costs, power consumption costs, etc.

According to a second aspect, the present invention also provides a block of wood shavings obtainable by means of the method of the present invention.

According to a third aspect, the present invention also provides a block of wood shavings obtainable by means of the method of the present invention for use in smoking and/or cooking foods.

Throughout the description and claims, the word "comprises" and variants thereof do not seek to exclude other technical features, additives, components, or steps. Furthermore, the word "comprises" includes the case of "consists of". For those skilled in the art, other objects, advantages, and features of the invention will become apparent in part from the description and in part from the practice of the invention. The following examples are provided by way of illustration and are not intended to be limiting of the present invention. Furthermore, the present invention covers all the possible combinations of particular embodiments herein indicated.

### EMBODIMENTS OF THE INVENTION

According to a first aspect, the present invention discloses a method of obtaining a block of wood shavings of the type that come from barrels used for fermenting alcoholic beverages, comprising the steps of:
a) washing the wood shavings by immersing them in an alkaline aqueous solution;
b) extracting the wood shavings and draining them;
c) washing the wood shavings by immersing them in an acidic aqueous solution;
d) extracting the wood shavings and draining them;
e) rinsing the wood shavings with water;
f) drying the wood shavings; and
g) binding together a plurality of wood shavings by compression, without the additional input of water or other additives or binders, such that they form a single body.

First the wood shavings are washed by immersing them in an alkaline aqueous solution (step a). This step provides the substantial sealing of the pores present in the wood shavings, such that the aroma is conserved therein for a substantially prolonged period of time.

According to a particular embodiment, the wood shavings are immersed in the alkaline aqueous solution for 15-20 min.

According to a particular embodiment, the alkaline aqueous solution is an aqueous solution of alkaline earth metal hydroxide, optionally an aqueous solution of sodium hydroxide. According to a more particular embodiment, the alkaline aqueous solution comprises 3-5% w/w of 28% sodium hydroxide. However, those skilled in the art will understand that in step a), any alkaline aqueous solution with a pH (in the range of 7.5-14, preferably above 10) and application time that are sufficient for allowing the substantial sealing of the pores present in the wood shavings, such that the aroma is conserved therein for a substantially prolonged period of time, may be used.

After the alkaline washing, the wood shavings are extracted and drained (step b). According to a particular embodiment, the wood shavings are furthermore rinsed with water to help remove the alkaline solution that may still be in them.

The wood shavings are then washed by immersing them in an acidic aqueous solution (step c). The alkaline pH that the wood shavings have after their prior alkaline washing is neutralized by means of this step.

According to a particular embodiment, the wood shavings are immersed in the acidic aqueous solution for 15-20 min.

According to a particular embodiment, the acidic aqueous solution is an aqueous solution of an inorganic acid, optionally an aqueous solution of sulfuric acid. According to a more particular embodiment, the acidic aqueous solution comprises 2-3% of 1-2% sulfuric acid (w/v). Once again, those skilled in the art will understand that any acidic aqueous solution with a pH (at most 7, preferably less than 3) and time of application that are sufficient for neutralizing the alkaline pH that the wood shavings have after their prior alkaline washing may be used in this step. For example, tartaric acid, which is a natural organic acid from grape, can be used, providing a more ecological process.

After the acidic washing step, the wood shavings are again extracted and drained (step d), rinsed with water (step e), and dried (step f).

The wood shavings obtained at this point of the method provide substantially improved properties. However, according to a particular embodiment of the present invention, after the step of rinsing with water (step e), the method still comprises the additional step e') of spraying the surface of the wood shavings with a concentrated potassium metabisulfite solution, as a result of which the development and growth of microorganisms in the wood shavings and the rot thereof are prevented.

Then, according to a particular embodiment of the present invention, the method also comprises the additional step e") of spraying the surface of the wood shavings with a combination of calcium carbonate and paraffins, such that the sealing of the pores of the wood shavings is additionally improved and conservation of the aroma therein until the time of use is even further enhanced.

In the step of drying (step f), the moisture content of the shavings is adjusted depending on the hardness thereof. Namely, the moisture content is reduced to suitable values so that the compression process (step g) can be performed under the best conditions and a quality end product can be obtained.

The hardness of the shavings depends on the type of wood of the barrel from which they come and may be affected by the alcoholic beverage that has been held in the barrel.

The most widely used wood in barrels is oak, which is a hard wood, with French oak and American oak being the most common. According to a particular embodiment, the shavings used are oak wood shavings, but optionally they may be of other type of wood without departing from the scope of the present invention as a result.

The higher the alcoholic content of the alcoholic beverage that was held in the barrel, the harder the wood is. The higher the hardness of the wood, the higher the moisture content and the higher the compression pressure needed in the shavings, and a slower compression process is needed to prevent the compression equipment from heating up and not suitably compacting the shavings.

As the moisture content of the wood increases, its adhesion properties increase and its mechanical properties decrease, thereby facilitating the binding and compaction of the wood shavings in the compression process. Nevertheless, the excess moisture content may cause negative effects in the obtained product quality, for example, deformation of the formed block to the point of even slowly disintegrating, development and growth of microorganisms, worse conservation state, reduced energy capacity, etc., so it is appropriate to apply a suitable moisture content which allows optimizing the benefits, in turn minimizing the negative effects.

The shavings acquire a moisture content while several of the steps are being carried out, for example during the washes in alkaline aqueous solution (step a) and in acidic aqueous solution (step c), as well as during rinsing (step e).

According to a particular embodiment, the wood shavings are dried in step f) until they have a moisture content of between 8 and 12%.

The inventors have observed that in the event that the barrel has held beverages such as red wine, muscatel, and fino wine, according to the present invention moisture contents of the shavings of between 8 and 10% are suitable; whereas in the event that the barrel has held beverages with a higher alcoholic content such as brandy, oloroso sherry, port wine, whisky, and cognac, moisture contents of the shavings of between 10 and 12% are suitable.

Those skilled in the art will understand that in the case of barrels that have held another type of beverages, other moisture content ranges may be suitable depending on the hardness of the wood shavings.

The wood shavings may be dried by means of any suitable conventional method, either leaving them to air dry or by means of any forced heating method, for example using a drying chamber or a microwave oven, in which the shavings remain for the time required to achieve the required degree of moisture.

After drying, the wood shavings are compacted such that they form a single body. The shavings are bound to one another by compression, without the additional input of water or other additives or binders (step g).

The inventors have realized that the treatments to which the wood shavings of patent document ES2444017A1 are subjected confer effects other than those disclosed in said document, which allow certain drawbacks of the prior art to be unexpectedly solved. Namely, said treatments allow the shavings obtained according to document ES2444017A1 to be bound in a single body by means of lower pressures than in the case of shavings of the state of the art, without the need for an additional input of water or other additives or binders, and without the need for mixing the original shavings with softer wood shavings. All this allows the compression binding step to not significantly affect the smoking characteristics previously acquired by the shavings, namely the intensity of the smoked aroma and flavor that are provided to foods, and the time of conservation of the aroma in the shavings until the time of use.

The pressure applied on the wood shavings in the compression binding step has an effect on the characteristics of the end product obtained. Namely, the greater the pressure, the more compact and harder the block of shavings obtained is, and the greater the combustion resistance, which allows the use thereof in environments with higher temperatures. In this case, smoke coming from combustion is given off more slowly and lasts for a longer time. Conversely, the lower the pressure, the less compact and the softer the block of shavings obtained is, and the lower the resistance to combustion. Accordingly, combustion of the block of shavings is faster and smoke coming from combustion is given off more quickly.

Moreover, as discussed above, the hardness of the wood shavings also affects the pressure to be applied during compression (the harder the shavings are, the higher the compression pressure). Accordingly, the compression pressure depends on the actual hardness of the shavings and on user needs or preferences.

According to a particular embodiment, the wood shavings are compressed in step g) with a pressure of between 100 and 300 bar, depending on needs.

The inventors tried to compact oak wood shavings which had not been subjected to the treatments of the present invention. The shavings were compressed by means of a pressure of 200 bar. The result was not satisfactory, since the shavings were not sufficiently bound together, a product fragmented in two pieces being obtained. However, by applying a pressure of 200 bar to shavings used in the present invention (shavings subjected to the treatments), a compact and fragmentation-free block of shavings was obtained.

The inventors have observed that in the event of the barrel having held beverages such as red wine, muscatel, fino wine, oloroso sherry, and port wine, according to the present invention compression pressures of between 100 and 150 bar are suitable; whereas for beverages such as brandy, whisky, and cognac, compression pressures of between 200 and 250 bar are suitable.

Those skilled in the art will understand that in the case of barrels that have held beverages of another type, other compression pressure ranges may be suitable.

According to a particular embodiment, the wood shavings used in the method of the present invention have a base of 2-3 cm and a thickness of 2-4 mm.

The shavings can be compressed by means of any suitable conventional equipment, for example by means of a device comprising a pressing chamber in which the wood shavings are introduced, and a piston pushing them against the walls of the chamber, exerting pressure until forming the block of shavings. The shape of the pressing chamber determines the shape and dimensions of the block of wood shavings. According to a particular embodiment, the compression binding step (step g) is performed so as to obtain a block with a rectangular prismatic shape with rounded edges.

According to a more particular embodiment, the compression binding step (step g) is performed so as to obtain a block of shavings with dimensions of 60x40x20 mm.

Nevertheless, both the shavings used and the block of shavings obtained may have other dimensions and shapes, depending on various issues, for example user needs, production needs, raw material availability, the particular design of the manufacturing machinery, storage needs, or combustion space adaptation needs, etc.

According to a second aspect, the present invention also provides a block of wood shavings obtainable by means of the method of the present invention. The smoking characteristics acquired by the shavings in steps prior to compression are not significantly affected by the compression process. The pores of the wood shavings forming the block of shavings are still substantially sealed, such that they conserve the natural aroma thereof coming from the fermentation of alcoholic beverages for a period of time substantially greater than that of the prior art.

As a result of the method of the present invention, a compact product of aromatic wood shavings (coming from barrels for fermenting alcoholic beverages) intended for smoking and/or cooking foods is obtained, providing the advantages characteristic of a compact product, without losing the good qualities of the wood shavings before compaction: a volume reduction of up to 80%; a high heating power of about 5,000 kcal/kg, which allows it to act as a source of fuel in addition to as a source of smell and flavor; high resistance to combustion, which allows the product to be consumed more slowly and for the smoking times to be longer (up to about 3 hours in hot smoking processes and up to 15 hours in cold smoking processes).

Furthermore, the block of wood shavings of the present invention is easy to use, simply previously immersing it in water for a few minutes being sufficient to help open up the pores of the shavings and thus allow the aroma contained therein to be released. The block of shavings is then subjected to a source of heat (for example directly over a flame or inside a grill, oven, or any smoking device in which foods are to be prepared) so that it can burn, smoke is given off, and the aroma of the alcoholic beverage fermented in the barrel is transmitted to foods. If the smoke needs to be given off more slowly, the block of shavings is subjected directly to the source of heat, without previously immersing it in water.

Although the present invention has been described in reference to particular embodiments thereof, those skilled in the art will be able to make modifications and variations to the above teachings without departing from the scope and the spirit of the present invention as a result.

Likewise, even though obtaining an optimal block of wood shavings comprises all the steps described hereinabove, the method of obtaining blocks of wood shavings according to the present invention may lack one or more of the preceding steps without departing from the scope of the present invention as a result, still obtaining blocks of wood shavings with substantially sealed pores which conserve their natural aroma for a period of time substantially greater than that of the prior art.

For example, further embodiments of the method of the present invention may lack the step of rinsing with water between alkaline and acid washes, the steps of spraying with concentrated potassium metabisulfite solution or with a combination of calcium carbonate and paraffins, etc.

## Claims

1. A method of obtaining a block of wood shavings of the type that come from barrels used for fermenting alcoholic beverages, comprising the steps of:
a) washing the wood shavings by immersing them in an alkaline aqueous solution;
b) extracting the wood shavings and draining them;
c) washing the wood shavings by immersing them in an acidic aqueous solution;
d) extracting the wood shavings and draining them;
e) rinsing the wood shavings with water;
f) drying the wood shavings;
**characterized in that** it comprises an additional step g) of binding together a plurality of wood shavings by compression, without the additional input of water or other additives or binders, such that they form a single body.

2. The method according to claim 1, wherein the shavings used are oak wood shavings.

3. The method according to any of the preceding claims, wherein the wood shavings are dried in step f) until they have a moisture content of between 8 and 12%.

4. The method according to claim 3, wherein the barrel from which the wood shavings come has been used for fermenting a beverage selected from the group comprising red wine, muscatel, and fino wine, and the shavings are dried in step f) until they have a moisture content of between 8 and 10%.

5. The method according to claim 3, wherein the barrel from which the wood shavings come has been used for fermenting a beverage selected from the group comprising brandy, oloroso sherry, port wine, whisky, and cognac, and the shavings are dried in step f) until they have a moisture content of between 10 and 12%.

6. The method according to any of the preceding claims, wherein the wood shavings are compressed in step g) with a pressure of between 100 and 300 bar.

7. The method according to claim 6, wherein the barrel from which the wood shavings come has been used for fermenting a beverage selected from the group comprising red wine, muscatel, fino wine, oloroso sherry, and port wine, and the shavings are compressed in step g) with a pressure of between 150 and 200 bar.

8. The method according to claim 6, wherein the barrel from which the wood shavings come has been used for fermenting a beverage selected from the group comprising brandy, whisky, and cognac, and the shavings are compressed in step g) with a pressure of between 200 and 250 bar.

9. The method according to any of the preceding claims, wherein the alkaline aqueous solution used in step a) has a pH in the range of 7.5-14, preferably above 10, and wherein the alkaline aqueous solution used in step a) is an aqueous solution of alkaline earth metal hydroxide.

10. The method according to claim 9, wherein the alkaline aqueous solution used in step a) comprises 3-5% w/w of 28% sodium hydroxide.

11. The method according to any of the preceding claims, wherein the acidic aqueous solution used in step c) has a maximum pH of 7, preferably less than 3 and wherein the acidic aqueous solution used in step c) is an aqueous solution of an inorganic acid.

12. The method according to claim 11, wherein the acidic aqueous solution used in step c) comprises 2-3% of 1-2% sulfuric acid (w/v).

13. The method according to any of the preceding claims, comprising an additional step e'), after step e), of spraying the surface of the wood shavings with a concentrated potassium metabisulfite solution.

14. The method according to claim 13, comprising an additional step e") of spraying the surface of the wood shavings with a combination of calcium carbonate and paraffins.

15. The method according to any of the preceding claims, wherein the wood shavings used have a base of 2-3 cm and a thickness of 2-4 mm.

16. A block of wood shavings obtainable by means of the method defined in any one of claims 1 to 15, **characterized in that** the pores of the shavings are substantially sealed such that they conserve their natural aroma.

17. The block of wood shavings obtainable by means of the method defined in any one of claims 1 to 15, for use in smoking and/or cooking foods.
